# DEMANDE DE BREVET EUROPEEN

(11) **EP 1 108 902 A1**
(43) Date de publication de la demande: **20.06.2001**
(21) Numéro de dépôt: 99811165.2
(22) Date de dépôt: 16.12.1999
(51) Int. Cl.: F16B 37/08

(54) **Système d'écrou rapide**

(71) Demandeur: Moser, Daniel, 2000 Neuchâtel (CH); Hablützel, Pierre-André, 2000 Neuchâtel (CH)
(72) Inventeur: Moser, Daniel, 2000 Neuchâtel (CH)
(74) Mandataire: Gresset, Jean

(57) **Abrégé**

L'invention concerne un système d'écrou rapide comportant un écrou destiné à coopérer avec un boulon (22), qui est réalisé en deux moitiés (12) symétriques par rapport à l'un de ses diamètres, et une bague de serrage (18) destinée à entourer l'écrou.

Les deux moitiés d'écrou (12) sont dimensionnées et conformées de manière à ce qu'elles puissent occuper une position, dite de travail, pour laquelle elles sont au contact de la bague (18) et tournent librement sur le boulon et une position, dite de serrage, pour laquelle elles sont appliquées sur le boulon. De plus, il est prévu des moyens (20), solidaires de la bague et actionnables de l'extérieur, pour agir sur les deux moitiés d'écrou de manière à les mettre soit en position de travail, la bague n'étant pas alors solidaire de l'écrou, soit en position de serrage, la bague étant alors solidaire de l'écrou.

## Description

La présente invention concerne un système d'écrou rapide, c'est à dire à un système grâce auquel un écrou peut être très rapidement mis en place sur un boulon puis retiré, sans qu'il soit nécessaire de lui faire parcourir, par rotation, toute la distance qui sépare l'extrémité du boulon de l'endroit où il doit travailler.

Depuis longtemps, les mécaniciens cherchent non seulement à réduire le temps qui est nécessaire pour amener un écrou à sa position de travail sur son boulon, mais aussi à l'en extraire, surtout si, pour diverses raisons, notamment la rouille, les deux pièces sont intimement réunies ou le filetage du boulon en mauvais état.

Une solution à ce problème est proposée, par exemple, dans le document GB 2 305 482. L'écrou est alors réalisé en deux moitiés identiques, symétriques par rapport à l'un de ses diamètres et maintenues assemblées au moyen d'une bague qui est ajustée sur lui. Le maintien de la bague sur l'écrou est assuré soit par quelques points de soudure, soit par des sortes de câles.

On voit immédiatement qu'une telle solution présente deux inconvénients. Tout d'abord, la fixation de la bague sur l'écrou étant difficile à réaliser sur place, elle doit, dans la plupart des cas, s'effectuer en atelier, ce qui oblige donc à visser l'ensemble sur toute la longueur du boulon. Par ailleurs, lorsqu'il s'agit de retirer l'écrou, il faut procéder à un véritable arrachage de la bague à l'aide d'un outil, ce qui peut ne pas être facile.

La présente invention a pour but de fournir un système d'écrou rapide qui est exempt des inconvénients ci-dessus.

De façon plus précise, l'invention concerne un système d'écrou rapide du type comportant un écrou, destiné à coopérer avec un boulon, qui est réalisé en deux moitiés symétriques par rapport à l'un de ses diamètres, et une bague de serrage destinée à entourer ledit écrou. Selon l'invention, ce système est caractérisé:
- en ce que les deux moitiés d'écrou et la bague sont dimensionnées et conformées de manière à ce que lesdites moitiés d'écrou puissent occuper une position, dite de travail, pour laquelle elles sont au contact de la bague et tournent librement sur le boulon et une position, dite de serrage, pour laquelle elles sont appliquées sur le boulon, et
- en ce qu'il comporte, en outre, des moyens, solidaires de la bague et actionnables de l'extérieur, pour agir sur les deux moitiés d'écrou de manière à les mettre soit en position de travail, la bague n'étant pas alors solidaire de l'écrou, soit en position de serrage, la bague étant alors solidaire de l'écrou.

Selon un mode de réalisation avantageux, les deux moitiés d'écrou délimitent ensemble un espace central circulaire seulement lorsqu'elles sont dans leur position de travail.

De préférence, les moyens pour agir sur les deux moitiés d'écrou comportent deux vis disposées dans la bague de manière diamétralement opposée.

L'écrou est avantageusement polygonal et ses deux moitiés sont symétriques par rapport à un diamètre passant par le centre de deux de ses faces opposées.

Selon un mode de réalisation préféré, le système selon l'invention comporte, en outre, deux ressorts reliant entre elles les extrémités en regard des deux moitiés d'écrou et agissant de manière à les écarter l'une de l'autre.

Par ailleurs, les deux moitiés d'écrou présentent avantageusement, sur un de leur côté, une portée servant à positionner axialement la bague sur l'écrou.

Enfin, l'épaisseur de la bague est, de préférence, du même ordre que celle de l'écrou.

D'autres caractéristiques et avantages de la présente invention ressortiront de la description qui va suivre, faite en regard du dessin annexé, sur lequel:
- la figure 1 représente en a et b un écrou selon l'invention dans sa position dite ouverte, respectivement vu en plan et vu de dessus;
- la figure 2 représente en a et b un écrou selon l'invention dans sa position dite de travail, respectivement vu en plan et vu de dessus;
- la figure 3 représente en a et b une bague de serrage de cet écrou, respectivement vue en plan et vue de dessus; et
- la figure 4 représente en a et b, vus en plan, l'écrou et sa bague assemblés et montés sur un boulon, respectivement lorsque les deux moitiés d'écrou sont en position de travail et en position dite de serrage, et en c les mêmes éléments vus de dessus.

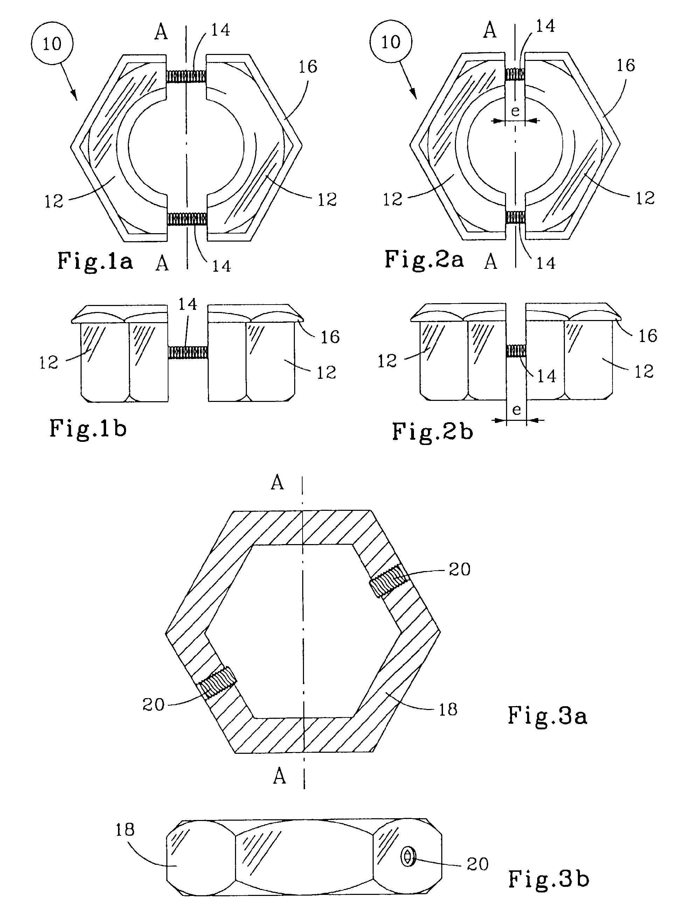

On se référera tout d'abord aux figures 1 et 2 qui montrent un écrou hexagonal 10 réalisé en deux moitiés identiques 12 symétriques par rapport à un diamètre AA passant par le centre de deux de ses faces opposées et reliées, par leurs extrémités en regard, au moyen de deux ressorts 14 qui tendent à les écarter l'une de l'autre. Ces deux ressorts peuvent être soit des ressorts à boudin, comme représenté, soit des ressorts de sécateur.

Par ailleurs, les deux demi-écrous présentent, sur l'un de leurs côtés, une portée 16 dont l'utilité apparaîtra plus loin.

On remarquera que les deux demi-écrous 12 ne forment pas un demi-cercle complet mais, comme il apparaît sur la figure 2, qu'ils délimitent ensemble un espace central parfaitement circulaire seulement lorsqu'il existe entre eux un écart e, c'est à dire lorsqu'ils se trouvent dans leur position dite de travail.

La figure 1 montre les deux demi-écrous 12 dans leur position dite ouverte, c'est à dire lorsque, n'étant soumis à aucune force extérieure, les deux ressorts 14 les repoussent l'un de l'autre à une distance sensiblement supérieure à e.

La figure 3 représente une bague 18, également hexagonale, dimensionnée de manière à ce que son contour intérieur corresponde exactement au contour extérieur de l'écrou 10 pour lequel son espace central est parfaitement circulaire (position de travail de la figure 2). L'épaisseur de la bague est avantageusement du même ordre que celle de l'écrou 10. Par ailleurs, la bague 18 possède, au milieu de deux de ses côtés opposés, des perforations alignées selon un diamètre de la pièce et destinées à recevoir des vis de serrage sans tête 20, avantageusement de type Imbus.

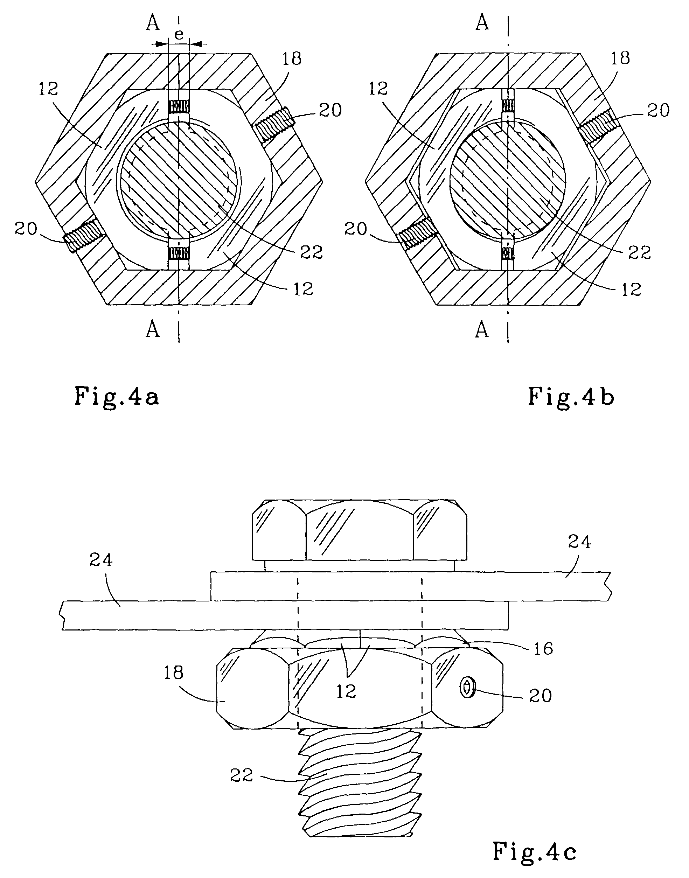

On se référera maintenant à la figure 4 qui montre l'écrou 10 et la bague de serrage 18 assemblés et montés sur un boulon 22 pour rendre solidaires deux pièces 24. Le boulon est dimensionné et fileté de manière à coopérer normalement avec l'écrou lorsque les deux demi-écrous 12 sont dans leur position de travail (figure 2).

Sur la figure 4a, on voit que les vis 20 sont dévissées jusqu'à une position pour laquelle leur extrémité intérieure n'émerge pas de la bague 18. De ce fait, sous l'action des ressorts 14, les deux demi-écrous 12, en position de travail, se trouvent appliqués contre la bague 18 mais restent en prise avec le boulon 22 sur lequel ils peuvent tourner librement.

Sur la figure 4b, les vis 20 sont vissées et appliquent les deux demi-écrous 12, alors dans leur position, dite de serrage, contre le boulon 22. Ils ne peuvent plus tourner librement sur lui.

Pour réaliser l'assemblage, l'écrou 10 est amené, en position ouverte, à proximité de la pièce 24 la plus proche en veillant à ce que la portée 16 soit située de son côté, comme le montre la figure 4c. L'opération est largement facilitée par l'écartement des deux demi-écrous 12, qu'autorisent les ressorts 14. Les demi-écrous étant alors appliqués manuellement contre le boulon, la bague de serrage 18 peut être placée sur l'écrou 10 en la poussant jusqu'à ce qu'elle vienne au contact de la portée 16 qui définit ainsi parfaitement le positionnement relatif des deux organes. L'écrou se trouve, à ce moment, dans sa position de travail illustrée par la figure 4a. L'ensemble peut alors être vissé comme un écrou normal, à l'aide d'un outil traditionnel, pour venir serrer les pièces 24.

Bien entendu, il est toujours possible de commencer par placer la bague 18 sur l'écrou 10 puis de visser l'ensemble sur le boulon, les deux demi-écrous 12 se trouvant dans leur position de travail.

La dernière opération, illustrée par la figure 4b, consiste simplement à visser les deux vis 20 de la bague à l'aide d'un clé adaptée, ce qui a pour effet à la fois de serrer les deux demi-écrous 12 contre le boulon 22 en comprimant les deux ressorts 14 et de rendre la bague 18 solidaire de l'écrou 10. Celui-ci est ainsi parfaitement bloqué sur le boulon dans sa position de serrage et la bague ne risque pas de s'échapper.

Lorsqu'il s'agit de retirer l'ensemble, il suffit de desserrer les vis sans tête 20. La bague 18 peut donc être désolidarisée de l'écrou, permettant ainsi l'écartement des deux demi-écrous 12 qui peuvent être aisément enlevés.

Bien entendu, lorsque l'état du boulon le permet, rien n'empêche, une fois que les vis 20 ont été desserrées, de retirer l'ensemble en le dévissant comme un écrou normal.

Ainsi est donc constitué, selon la présente invention, un système d'écrou dont la mise en place et l'enlèvement sont effectués rapidement, quel que soit l'état du boulon mais qui, en plus, garantit son verrouillage.

Il est à noter que, malgré le fait que l'écrou soit en deux parties, l'utilisation d'une bague de serrage épaisse confère à l'ensemble une excellente résistance mécanique. Par ailleurs, lorsque l'ensemble n'est pas serré, l'action que les deux ressorts 14 exercent sur les demi-écrous 12 permet de maintenir la bague 18 en place même lorsque le système est en position verticale.

## Revendications

1. Système d'écrou rapide comportant un écrou (10), destiné à coopérer avec un boulon (22), qui est réalisé en deux moitiés (12) symétriques par rapport à l'un de ses diamètres, et une bague de serrage (18) destinée à entourer ledit écrou, caractérisé:
- en ce que les deux moitiés d'écrou (12) et la bague (18) sont dimensionnées et conformées de manière à ce que lesdites moitiés d'écrou puissent occuper une position, dite de travail, pour laquelle elles sont au contact de la bague et tournent librement sur le boulon et une position, dite de serrage, pour laquelle elles sont appliquées sur le boulon, et
- en ce qu'il comporte, en outre, des moyens (20), solidaires de la bague et actionnables de l'extérieur, pour agir sur les deux moitiés d'écrou de manière à les mettre soit en position de travail, la bague n'étant pas alors solidaire de l'écrou, soit en position de serrage, la bague étant alors solidaire de l'écrou.

2. Système d'écrou rapide selon la revendication 1, caractérisé en ce que les deux demi-écrous (12) délimitent ensemble un espace central circulaire seulement lorsqu'ils sont dans leur position de travail.

3. Système d'écrou rapide selon l'une des revendications 1 et 2, caractérisé en ce que lesdits moyens comportent deux vis (20) disposées dans la bague de manière diamétralement opposée.

4. Système d'écrou rapide selon l'une des revendications 1 à 3, caractérisé en ce que l'écrou est polygonal et en ce que ses deux moitiés sont symétriques par rapport à un diamètre passant par le centre de deux de ses faces opposées.

5. Système d'écrou rapide selon l'une des revendications 1 à 4, caractérisé en ce qu'il comporte, en outre, deux ressorts (14) reliant entre elles les extrémités en regard des deux moitiés d'écrou et agissant de manière à les écarter l'une de l'autre.

6. Système d'écrou rapide selon l'une des revendications 1 à 5, caractérisé en ce les deux moitiés d'écrou présentent, sur un de leur côté, une portée (16) servant à positionner axialement la bague sur l'écrou.

7. Système d'écrou rapide selon l'une des revendications 1 à 6, caractérisé en ce que l'épaisseur de la bague est du même ordre que celle de l'écrou.
